(19) Europäisches Patentamt
European Patent Office
Office européen des brevets

(11) **EP 4 592 425 A1**

(12) **EUROPEAN PATENT APPLICATION**

(43) Date of publication:
**30.07.2025 Bulletin 2025/31**

(21) Application number: **24153809.9**

(22) Date of filing: **24.01.2024**

(51) International Patent Classification (IPC):
$C25B\ 1/04^{(2021.01)}$ $\quad C25B\ 9/05^{(2021.01)}$
$C25B\ 9/77^{(2021.01)}$ $\quad C25B\ 15/02^{(2021.01)}$
$C25B\ 15/08^{(2006.01)}$

(52) Cooperative Patent Classification (CPC):
**C25B 1/04; C25B 9/05; C25B 9/77; C25B 15/02;
C25B 15/08; C25B 15/083**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **OÜ Stargate Hydrogen Solutions
11415 Tallinn (EE)**

(72) Inventors:
• **GROLIG, Jan Gustav
  11415 Tallinn (EE)**
• **APAYDIN, Ardan
  11415 Tallinn (EE)**
• **KÜNGAS, Rainer
  11415 Tallinn (EE)**

(74) Representative: **Sarap, Margus
  Jalaka 42-23
  50109 Tartu (EE)**

(54) **ELECTROLYSER SYSTEM**

(57) The present invention discloses an electrolyser system (100) and a method for operating the electrolyser system. The electrolyser system (100) comprises an electrolyser stack (101) further comprising a cathode compartment and an anode compartment separated by a diaphragm. A catholyte inlet (102) of the stack (101) is configured for supplying catholyte to the cathode compartment of the stack (101) and an anolyte inlet (103) configured for supplying anolyte to the anode compartment of the stack (101). A catholyte outlet (104) transports gas-electrolyte mixture from the cathode compartment to a hydrogen separator (106) and an anolyte outlet (105) transports gas-electrolyte mixture from the anode compartment to an oxygen separator (107). A pressure control unit (110) is configured to establish a predefined differential pressure ($\Delta p$) between the cathode compartment and the anode compartment of the stack (101) by maintaining the pressure at the cathode compartment greater than the pressure at the anode compartment.

FIG. 1

EP 4 592 425 A1

**Description**

TECHNICAL FIELD

The present invention relates to an electrolyser system, in particular the invention relates to a water electrolyser system using alkaline medium. The present invention particularly relates to an electrolyser system and a method for operating the electrolyser system.

BACKGROUND ART

In alkaline water electrolysis, water is electrochemically converted into hydrogen and oxygen in alkaline medium: $H_2O = H_2 + 0.5\ O_2$. An electrolysis cell comprises two electrodes (an anode and a cathode) and an electrolyte. The electrolyte comprises a liquid alkaline medium such as an aqueous solution of hydroxides and/or carbonates. The alkaline electrolyte flows through the anode and cathode compartment of the cell, which are connected fluidically in parallel, thereby immersing the electrodes in the electrolyte. During operation, an electric potential is applied between the two electrodes, resulting in the flow of electrolysis current through the electrolysis cell. During operation, hydrogen is generated on the cathode according to the hydrogen evolution reaction (HER): $2\ H_2O + 2e- = H_2 + 2\ OH$, while oxygen is generated on the anode according to the oxygen evolution reaction (OER): $2\ OH^- = 0.5\ O_2 + H_2O + 2e-$. The electrolysis cell further comprises a porous separator (diaphragm) and/or an ion exchange membrane capable of conducting hydroxide ions and separating both half-cells to prevent mixing of the product gases. The electrodes are placed on either side of the separator in a sandwich-like manner. The cells are typically assembled electrically in series in a cell stack between a first end plate and a second end plate. The higher the number of cells in the stack, the more hydrogen and oxygen can be produced in unit time.

During electrolysis operation, the hydrogen generated at the cathode side contains some amount of oxygen and electrolyte as impurities. Similarly, the oxygen generated at the anode side contains some amount of hydrogen and electrolyte as impurities. In particular, hydrogen gets introduced to the oxygen stream and the extent of this phenomenon is characterized by HTO (hydrogen to oxygen), defined in Equation 1 as

$$HTO = \frac{n_a^{H2}}{n_a^{O2}+n_a^{H2}} \qquad\qquad \text{(Equation 1)}$$

where $n_a^{H2}$ is the volumetric flow rate of hydrogen in the anolyte outlet compartment and $n_a^{O2}$ is the volumetric flow rate of oxygen in the anolyte outlet. Similarly, the oxygen gets introduced to the hydrogen stream and the extent of this phenomenon is characterized by OTH (oxygen to hydrogen), defined in Equation 2 as

$$OTH = \frac{n_c^{O2}}{n_c^{H2}+n_c^{O2}} \qquad\qquad \text{(Equation 2)}$$

where $n_c^{O2}$ is the volumetric flow rate of oxygen in the catholyte outlet and $n_c^{H2}$ is the volumetric flow rate of hydrogen in the catholyte outlet.

As is known to those skilled in the art, the gas crossover through the porous separator occurs due to three primary reasons: 1) electrolyte mixing, i.e., mixing anolyte and catholyte streams before supplying the electrolyte back to the electrolyser stack, 2) diffusion across the separator, 3) pressure-driven convection across the separator, which is represented by Equation 3:

$$n_{total} = n_{mix} + n_{diff} + n_{conv} \qquad \text{(Equation 3)}$$

Here, $n_{total}$ is the total volumetric flow rate of the impurity species, i.e. $H_2$ in the anolyte stream and $O_2$ in the catholyte stream, $n_{mix}$ is the volumetric flow rate of impurity species that is added because of anolyte and catholyte mixing, $n_{diff}$ is the volumetric flow rate of impurity species that is added due to diffusion across the porous separator, and $n_{conv}$ is the volumetric flow rate of impurity species that is added due to convection across the porous separator. During diffusive mass transfer, a concentration difference between the anode and cathode side of the cell causes the impurity species to be carried through the porous separator over to the other side of the cell. In case of convection, a flow of impurity species occurs as a result of a differential pressure between the anode and cathode side of the cell. It is common practice to operate the cathode compartment and anode compartment of the cells at equal pressures in order to minimize convective transport in alkaline electrolyser cells and stacks. The combination of diffusion and convection is commonly referred to as 'cross-over' or 'gas cross-over'. This cross-over permits the passage of both oxygen and hydrogen through the diaphragm, resulting in higher than desirable OTH and HTO compared to an ideal scenario where no cross-over occurs. Importantly, cross-over increases potential risk of exceeding a lower explosion limit (LEL) for HTO in the anode compartment of the electrolyser, which limits the operating range of electrolyser. The gas cross-over decreases the overall efficiency of the electrolyser system in two significant ways: (1) the cross-over leads to a loss of hydrogen to the anode compartment, effectively reducing the Faradaic efficiency of the system. (2) The crossover results in additional hydrogen loss at a deoxo unit located downstream of the electrolysis stack, where any oxygen present in the produced hydrogen is removed by making it catalytically react with the hydrogen.

According to M. T. de Groot et al. (International Journal of Hydrogen Energy, 47(82), 34773-34783 (2023)), conventional alkaline electrolysers under typical operating conditions experience cross-over dominated by diffusion, and convective transport can be considered to be negligible.

The oxygen, typically unwanted in most applications, is usually vented into the atmosphere. On the other hand, the highly valuable hydrogen product suffers losses due to cross-over. In the view of all the above approaches, there is a need for an arrangement design that substantially minimizes cross-over of gases, particularly the cross-over of oxygen, between the anode and cathode compartments during electrolysis, ultimately maximizing the purity of the hydrogen gas.

DISCLOSURE OF THE INVENTION

The primary object of the present invention is to minimize gas cross-over resulting from diffusion by introducing controlled convection-driven cross-over influenced by differential pressure. Another objective is to decrease the oxygen-to-hydrogen ratio (OTH) within the generated hydrogen gas. Additionally, the invention seeks to prevent additional hydrogen loss in the latter phase of the electrolyser system.

The above objective of the present invention can be achieved by the following technical solutions.

The various embodiments of the present invention disclose an electrolyser system comprising at least one electrolyser stack further comprising a plurality of cells, each cell comprising a cathode compartment and an anode compartment separated by a diaphragm. A catholyte inlet of the stack is configured for supplying catholyte to the cathode compartment of the stack and an anolyte inlet configured for supplying anolyte to the anode compartment of the stack. A catholyte outlet transports gas-electrolyte mixture from the cathode compartment to a hydrogen separator and an anolyte outlet transports gas-electrolyte mixture from the anode compartment to an oxygen separator. The catholyte outlet further transports a hydrogen gas separated from electrolyte in the hydrogen separator to a de-oxo unit for further processing. The anolyte outlet transports an oxygen gas separated from the electrolyte in the oxygen separator. A pressure control unit is configured to establish a predefined differential pressure between the cathode compartment and the anode compartment of the stack. The predefined differential pressure is required to be greater than zero and the pressure at the cathode compartment to be greater than the pressure at the anode compartment.

According to a first embodiment of the present invention, the system comprises a first inlet valve and a second inlet valve, which are located at the catholyte inlet and the anolyte inlet of the stack, respectively. The pressure control unit comprises a first differential pressure sensor located between the inlets. The pressure control unit comprises a differential pressure controller configured to control the valves located at the inlets. The controller is in digital communication with the first differential pressure sensor and the inlet valves. The differential pressure controller controls the first inlet valve and/or the second inlet valve based on the input from the first differential pressure sensor, to establish the predefined differential pressure.

According to a second embodiment of the present invention, the system comprises a first outlet valve and a second outlet valve, which are located at the catholyte outlet and the anolyte outlet of the stack, respectively. The pressure control unit comprises a second differential pressure sensor located between the outlets. The differential pressure controller from the pressure control unit is configured to control the valves located at the outlets of the stack. The controller is in digital communication with the second differential pressure sensor and the outlet valves. The differential pressure controller controls the first outlet valve and/or the second outlet valve based on the input from the second differential pressure sensor, to establish the predefined differential pressure.

In the second embodiment of the present invention, the catholyte inlet and the anolyte inlet are at least partially combined for mixing the catholyte and the anolyte. The mixed electrolyte is supplied to the stack through a common electrolyte inlet.

According to the third embodiment of the present invention, the differential pressure controller controls one or both inlet valves and one or both outlet valves based on the input from the first differential pressure sensor and the second differential pressure sensor, to establish the predefined differential pressure.

According to a preferred embodiment of the present invention, the predetermined differential pressure is proportional to a direct current applied to the stack, i.e., the predetermined differential pressure is smaller when the direct current applied to the stack is low and the predetermined differential pressure is larger when the direct current applied to the stack is high.

According to another embodiment of the present invention, the pressure control unit further comprises an OTH sensor in communication with the differential pressure controller. Alternatively, an HTO sensor is used instead of the OTH sensor. The controller further controls the predetermined differential pressure based on an input from the OTH sensor or the HTO sensor. The predetermined differential pressure is increased when the hydrogen purity is below a required purity value.

The predetermined differential pressure between the cathode compartment and the anode compartment of the stack is determined to be less than 400 millibar (less than 40000Pa), more preferably between 1 and 200 millibar (between 100Pa and 20000Pa).

The various embodiments of the present invention disclose a method to operate the electrolyser system. The method comprises steps of: (1) supplying anolyte through the anolyte inlet into the anode compartment of the electrolyser stack; (2) supplying catholyte through the catholyte inlet to the cathode compartment of the stack; (3) transporting gas-electrolyte mixture by the catholyte outlet from the cathode compartment; (4) transporting gas-electrolyte mixture by the anolyte outlet from the anode compartment; and (5) establishing the predefined differential pressure between the cathode compartment and the anode compartment of the stack using the pressure control unit; wherein the predefined differential pressure is greater than zero and the pressure at the cathode compartment is greater than the pressure at the anode compartment.

According to a first method embodiment of the present invention, the method to operate the electrolyser comprises steps of: controlling the first inlet valve and/or the second inlet valve by the differential pressure controller and establishing the predefined differential pressure based on the input from the first differential pressure sensor.

According to a second method embodiment of the present invention, the method to operate the electrolyser comprises step of: controlling the first outlet valve and/or the second outlet valve by the differential pressure controller and establishing the predefined differential pressure based on the input from the second differential pressure sensor.

According to a third method embodiment of the present invention, the method to operate the electrolyser comprises step of: one or both inlet valves and one or both outlet valves by the differential pressure controller and establishing the predefined differential pressure based on the input from the first differential pressure sensor and the second differential pressure sensor.

According to a preferred embodiment of the present invention, the method to operate the electrolyser comprises step of: maintaining the predetermined differential pressure between the cathode compartment and the anode compartment of the stack to be less than 400 millibar, wherein the predetermined differential pressure is preferably between 1 to 200 millibar.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

## BRIEF DESCRIPTION OF THE DRAWINGS

The summary above, as well as the following detailed description of illustrative embodiments, is better understood when read in conjunction with the appended drawings. For the purpose of illustrating the present invention, exemplary constructions of the embodiments of the invention are shown in the drawings, with references to the following diagrams wherein:

Fig. 1 is an explanatory view of an electrolyser system, according to a general embodiment of the present invention.

Fig. 2 is an explanatory view of the electrolyser system, according to a first embodiment of the present invention.

Fig. 3 is an explanatory view of the electrolyser system, according to a second embodiment of the present invention.

Fig. 4 is a graphical representation of HTO across a Zirfon diaphragm as a function of electrolysis current density and electrolyser operating pressure, from M. T. de Groot *et al.,* according to a prior art of the present invention.

Fig. 5a is a graphical representation of oxygen cross-over in relation to the differential pressure $\Delta p$, according to an embodiment of the present invention.

Fig. 5b is a graphical representation of OTH and HTO as a function of the differential pressure $\Delta p$ between the anode compartment and the cathode compartment, according to an embodiment of the present invention.

Fig. 6 is a graphical representation of the relation between the HTO (pressure driven convection without electrolyte mixing) and the differential pressure between the compartments, according to an embodiment of the preset invention.

Fig. 7 is a graphical representation of differential pressure between the cathode and the anode compartment on the hydrogen flow rate before and after purification using de-oxo, according to an embodiment of the present invention.

It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

## DETAILED DESCRIPTION OF THE INVENTION

In the following detailed description, a reference is made to the accompanying drawings that form a part hereof, and in which the specific embodiments that may be practiced are shown by way of illustration. These embodiments are described in sufficient detail to enable those skilled in the art to practice the embodiments and it is to be understood that the logical, mechanical and other changes may be made without departing from the scope of the embodiments. The following detailed description is therefore not to be taken in a limiting sense.

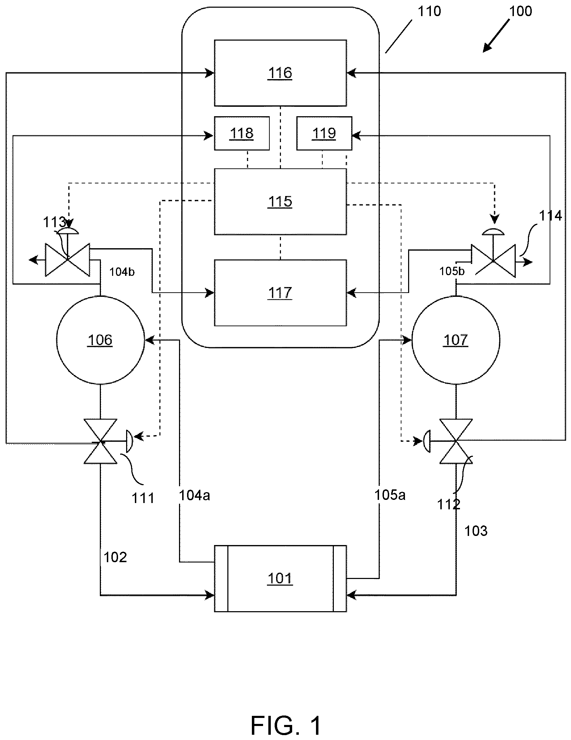

The various embodiments of the present invention disclose an electrolyser system 100 which comprises an electrolyser stack 101, preferably an alkaline electrolyser stack for electrochemically splitting water and generating hydrogen and oxygen. The various embodiments of the present invention disclose an electrolyser system 100, as shown in Fig. 1. The system 100 which comprises an electrolyser stack 101, preferably an alkaline electrolyser stack for electrochemically splitting water and generating hydrogen and oxygen. The electrolyser stack comprises a first end plate, a second end plate and a plurality of electrolysis cells stacked between the end plates. The end plates serve as negative and positive terminals, respectively, to which DC power is supplied. Each cell in the stack comprises of a plurality of cell components, including but not limited to at least two electrodes - one acting as an anode and other as cathode - placed on either side of a diaphragm, a bipolar plate placed between the cells, and a diaphragm.

The spaces between anodes and the diaphragms form an anode compartment of the stack 101, similarly the spaces between the cathodes and the diaphragms form a cathode compartment of the stack 101. The electrolyser system further comprises at least a catholyte inlet 102 and an anolyte inlet 103 for supplying a catholyte and an anolyte to the cathode compartment and the anode compartment, respectively. A gas-electrolyte mixture formed at the cathode compartment and the anode compartment is carried out of stack 101 through a catholyte outlet 104 and an anolyte outlet 105, respectively. The catholyte outlet 104 transports a hydrogen-catholyte mixture from the cathode compartment into a hydrogen separator 106 and transports a separated hydrogen from the hydrogen separator 106 to a de-oxo unit (not shown in drawings) for further processing. The anolyte outlet 105 transports an oxygen-anolyte mixture from the anode compartment into an oxygen separator 107 and transports a separated oxygen out of the oxygen separator 107.

In order to reduce the gas cross-over due to diffusion, the aim of the present invention is to introduce convection cross-over of the hydrogen into the anolyte compartment. According to Schalenbach et al. (Journal of The Electrochemical Society, 163 (11) F3197-F3208 (2016)), the pressure convection crossover caused by the differential pressure $\Delta p$ between the anode and cathode compartment can be derived based on Darcy's law by Equation 4 as:

$$n_{conv} = \frac{K_d}{\zeta} S p \frac{\Delta p}{d_d} = \varepsilon_{Darcy} \frac{\Delta p}{d_d} \qquad \text{(Equation 4)},$$

where $K_d$ is the permeability of the diaphragm, and $\zeta$ is the dynamic viscosity of the electrolyte, S is the solubility of the impurity species, p is electrolyser operating pressure, $d_d$ is the thickness of the diaphragm, and $\varepsilon_{Darcy}$ is pressure-driven hydrogen permeability. To drive hydrogen gas cross-over by convection, a differential pressure $\Delta p$ is created by making the pressure in the cathode compartment $p_c$ to be higher than the pressure in the anode compartment $p_a$ as in Equation 5.

$$\Delta p = p_c - p_a > 0 \qquad \text{(Equation 5)}$$

The differential pressure $\Delta p$ pushes hydrogen formed in the cathode compartment to the anode compartment while the oxygen cross-over from the anode compartment to the cathode compartment is significantly suppressed. The advantage of this technique is that hydrogen gas generated in the cathode compartment has high purity, and the technique further minimizes the loss of hydrogen in the deoxo unit. In some cases, the resulting hydrogen product gas may not require further purification, and the deoxo unit is no longer required. The increased hydrogen gas purity is obtained at the expense of hydrogen loss via the convective cross-over, and at the expense of a lower purity for the product oxygen, which is however in most cases vented.

The present invention further discloses a pressure control unit 110 as a part of the electrolyser system. The pressure control unit 110 is programmed to establish the predefined differential pressure $\Delta p$ between the cathode compartment and the anode compartment of the stack 101. To establish pressure-driven convection, the predefined differential pressure $\Delta p$ is maintained to be greater than zero (Equation 5). The predefined differential pressure $\Delta p$ is calculated based on an allowable HTO limit and an operating load of the stack 101. To achieve the convective flow of hydrogen gas to the anode side, the pressure at the cathode compartment $p_c$ is greater than the pressure at the anode compartment $p_a$, i.e. $p_c > p_a$. The predefined differential pressure $\Delta p$ is created by controlling the flow rates of the electrolyte and the gases flowing to and from the stack 101.

A plurality of valves is installed at the inlets 102, 103 and the outlets 104, 105 of the stack 101 to control the flow rate of electrolyte and gases flowing to and from the stack 101. A first inlet valve 111 and a second inlet valve 112 are located at the catholyte inlet 102 and the anolyte inlet 103 of the stack 101, respectively. Furthermore, a first outlet valve 113 and a second outlet valve 114 are located at the catholyte outlet 104 and the anolyte outlet 105 respectively. The first outlet valve 113 and the second outlet valve 114 are located after the hydrogen separator 106 and the oxygen separator 107, respectively. Alternatively, the first outlet valve 113 and the second outlet valve 114 can be located upstream of the hydrogen separator 106 and the oxygen separator 107, i.e., between the stack 101 and the separators 106, 107.

As shown in Fig. 1, the pressure control unit 110 comprises a differential pressure controller 115 configured to establish and monitor the predefined differential pressure $\Delta p$ between the anode compartment and the cathode compartment of the stack 101. The inlet valves 111, 112 and the outlet valves 113, 114 are regulated by the differential pressure controller 115. The differential pressure controller 115 controls the flow rates at the inlets 102, 103 and/or the outlets 104, 105 to ensure that the pressure at the cathode compartment $p_c$ is higher than the pressure at the anode compartment $p_a$.

The differential pressure controller 115 is in digital communication with a first differential pressure sensor 116 and a second differential pressure sensor 117. The first differential pressure sensor 116 is installed between the anolyte inlet 103 and the catholyte inlet 102 to measure the differential pressure $\Delta p_i$ between the inlets 102, 103. In correspondence, the second differential pressure sensor 117 is installed between the oxygen separator 107 outlet and the hydrogen separator 106 outlet to measure the differential pressure $\Delta p_o$ between the outlets 104, 105. The measured differential pressure ($\Delta p_i$ and/or $\Delta p_o$) is forwarded as an input to the differential pressure controller 115.

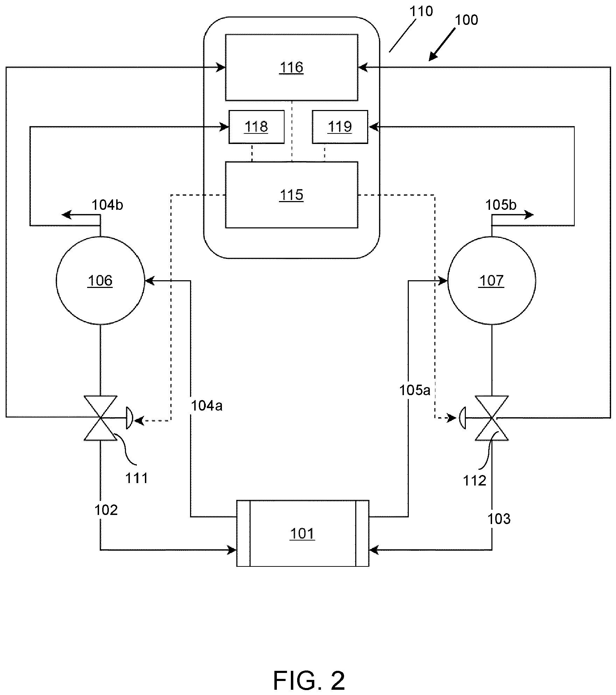

In a first embodiment of the present invention, as shown in Fig. 2, the flow rates of the inlets 102, 103 to the stack 101 are controlled by the pressure control unit 110 to achieve the predefined differential pressure between the anode compartment and the cathode compartment. The pressure control unit 110 herein comprises the differential pressure controller 115 in communication with the first differential pressure sensor 116, the first inlet valve 111 and the second inlet valve 112. Initially, the controller 115 regulates the second inlet valve 112 to set the anolyte flow rate supplied to the stack 101. To achieve the convective flow of hydrogen gas to the anode side, the controller 115 regulates the first inlet valve 111 to establish the catholyte flow rate to be higher than the anolyte flow rate, thus achieving the predetermined differential pressure $\Delta p_i$. Alternatively, the controller sets the catholyte flow rate and regulates the first inlet valve 111 to reduce the anolyte flow rate. The differential pressure $\Delta p_i$ is measured by the first differential pressure sensor 116 and is regularly monitored by the controller 115 based on the input from the differential pressure sensor 116. Upon variation in either of the flow rates, the controller 115 regulates the first inlet valve 111 and/or the second inlet valve 112 to increase or decrease the catholyte flow rate and/or the anolyte flow rate, based on the input from the first differential pressure sensor 116 to maintain the predetermined differential pressure $\Delta p_i$.

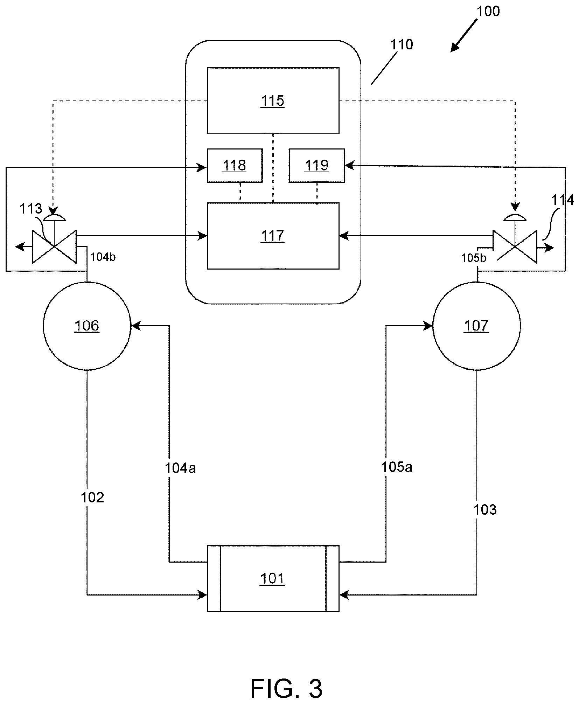

In a second embodiment of the present invention, as shown in Fig. 3, the pressure of the gases at the outlets 104, 105 of the separators are controlled by the pressure control unit 110 to achieve the predefined differential pressure between the anode compartment and the cathode compartment. Herein, the valves 113, 114 are placed downstream of the separators. The pressure control unit 110 herein comprises the differential pressure controller 115 in communication with the second differential pressure sensor 117, the first outlet valve 113 and the second outlet valve 114. The controller 115 regulates the second outlet valve 114 to set the oxygen pressure at the outlet of the second separator 107. To achieve the convective transfer of hydrogen to the anode side in the stack 101, the controller 115 regulates the first outlet valve 113, for increasing the pressure of the hydrogen at the hydrogen separator 106 to be higher than the oxygen pressure. Alternatively, the controller regulates the first outlet valve 113 to set the hydrogen pressure and regulates the second outlet 114 valve to decrease the oxygen pressure to achieve the predetermined differential pressure $\Delta p_o$. The predetermined differential pressure $\Delta p_o$ is measured by the second differential pressure sensor 117 and regularly monitored by the controller 115 based on the input from the second differential pressure sensor 117. Upon variation in any one of the pressure rates, the differential pressure controller 115 regulates the first outlet valve 113 and/or the second outlet valve 114 to increase or decrease the hydrogen pressure and/or the oxygen pressure, based on the input from the second differential pressure sensor 117 to maintain the predetermined differential pressure $\Delta p_o$. According to an alternate to the second embodiment of the present invention, the catholyte inlet 102 and the anolyte inlet 103 can be combined for at least partially mixing the catholyte and the anolyte. The mixed electrolyte is supplied to the stack through a common electrolyte inlet.

According to an alternate of the second embodiment, the first outlet valve 113 and second outlet 114 valve are located between the stack 101 and the separators 106, 107, i.e. 104a, 105a of the system 100 to regulate the flow rates of the gas-electrolyte flowing from the stack 101 and the separators 106, 107. The second differential pressure sensor 116 is connected to the outlet valves to measure the flowrates of the gas electrolyte at the outlets 104a, 105a. The differential pressure controller 115 is configured to control the valves 113, 114 to establish the predefined pressure differential between the anode compartment and the cathode compartment. However, the arrangement is deemed to be impractical due to potential operational risks. The control of the valves at this placement, if not carefully managed, can result in a sudden increase in the stack's pressure. This abrupt elevation in pressure poses a significant threat of damage to both the stack and the entire system, rendering this configuration unfeasible for practical implementation.

In a third embodiment of the present invention, referring to Fig. 1, the flow rates of the inlets 102, 103 to the stack 101 and the pressure of the gases at the outlets 104, 105 of the separators are controlled in combination by the pressure control unit 110 to achieve the predefined differential pressure between the anode compartment and the cathode compartment. The pressure control unit 110 herein comprises the differential pressure controller 115 in communication with the first differential pressure sensor 116 and the second differential pressure sensor 117. To achieve the convective transfer of hydrogen to the anode side in the stack 101, the differential pressure controller 115 regulates the first inlet valve 111 and/or the second inlet valve 112 in combination with the first outlet valve 113 and/or the second outlet valve 114 to increase or decrease the inlet flow rates, and/or the outlet gas pressures, based on the input from the first differential pressure sensor 116 and the second differential pressure sensor 117 to maintain the predetermined differential pressure $\Delta p_i$ and $\Delta p_o$. The lower explosion limit (LEL) for the hydrogen in oxygen (HTO) is around 4 Vol% (i.e. volumetric ratio of hydrogen to oxygen), thereby the maximum allowable HTO in the anode compartment of the electrolyser is typically chosen to be below 2 Vol% for safety reasons. Therefore, the differential pressure $\Delta p$ needs to be chosen such that the HTO < 2 Vol%. As is known to a person skilled in the art, the HTO is dependent on electrolysis current density, diaphragm thickness, the pressure-driven permeability of the diaphragm, as well as the differential pressure.

According to an embodiment of the present invention, the pressure control unit 110 further comprises an OTH sensor 118 located after hydrogen separator 106 or the de-oxo unit, the OTH sensor 118 is configured to measure the purity of hydrogen exiting the hydrogen separator 106. The differential pressure controller 115, in communication with the OTH sensor 118, controls the predetermined differential pressure $\Delta p$ based on an input from the OTH sensor 118. The differential pressure $\Delta p$ is increased when the hydrogen purity is below a required purity value. Alternatively, the differential pressure sensor is in communication with an HTO sensor 119 located after the oxygen separator 107. Based on an input from the HTO sensor 119, the controller controls the differential pressure $\Delta p$ so that the HTO is under LEL which is 2%.

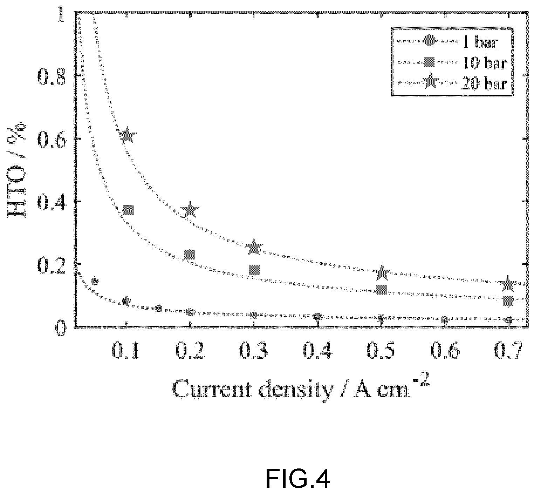

Fig. 4 is a graphical representation of HTO across a Zirfon diaphragm as a function of electrolysis current density and electrolyser cell operating pressure, from M. T. de Groot *et al*. The graph represents the system operating at 60 °C, with 0.5mm porous diaphragm (Zirfon PERL UTP500), 32 wt% KOH, electrode area 100 cm$^2$ and diaphragm area 227 cm$^2$, for different operating pressures (atmospheric pressure, 10 bar and 20 bar (1000kPa and 2000kPa) and separated electrolyte circuits. For a particular operating pressure, Fig. 4 demonstrates that at zero differential pressure $\Delta p$ between the cathode compartment and the anode compartment, the percentage of HTO is elevated when the electrolyser is operated at low current density, surpassing the Lower Explosion Limit (LEL). As the current density increases, the HTO percentage decreases well below the LEL. Accordingly, the pressure control unit 110 is configured to adopt the technique of the present invention when the stack 101 is operating above a reference load, preferably at a maximum load, when the HTO percentage with the pressure driven convection is below the LEL. Higher differential pressure $\Delta p$ is permitted as the system operates farther away from the reference load compared to operation under load near to the reference load.

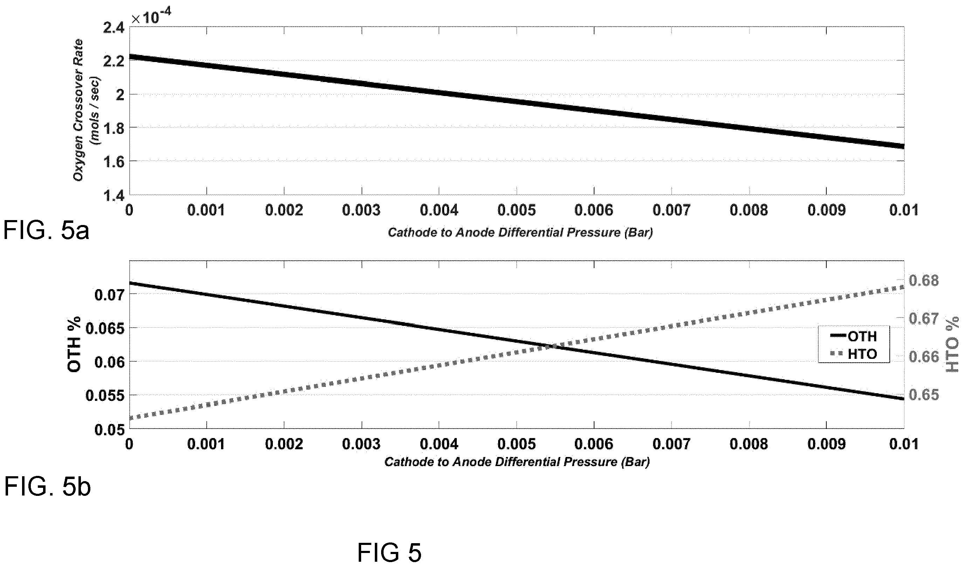

Fig. 5 demonstrates the simulations showing relation between the differential pressure $\Delta p$ and various parameters affected due to implementation of the present invention. The graphs represent a system operating at the stack pressure of 30 bar, with operating temperature 90 °C and a current density of 1.5 kA/m$^2$. The total active cell area per stack is 46.18 m$^2$, there are 120 cells per stack and the simulation considers a single stack per electrolyser system. Moreover, the simulations take into account the absence of any electrolyte mixing process during the investigation, hence the impurity due to electrolyte mixing ($n_{mix}$) is zero. Both graphs are plotted with differential pressure $\Delta p$ on x-axis, that is varied from 0 to 10 millibar. Fig. 5a shows the change of oxygen cross-over from anode to the cathode compartment as a function of differential pressure. Fig. 5b depicts the effect of differential pressure on HTO and OTH behavior. When there is no differential pressure, oxygen cross over is 2.2 x 10$^{-4}$ mols/s on stack level with OTH 0.07% and the HTO is below 0.65%. Fig 5a discloses that as the differential pressure increases, the amount of oxygen cross-over from the anode compartment to the cathode compartment decreases. This effect is caused by the increased convection from the cathode compartment to the anode compartment, which suppresses oxygen cross-over via diffusion. A similar effect is observed in Fig. 5b, where an increase in differential pressure $\Delta p$ leads to a reduction in OTH due to a diminished oxygen crossover to the cathode compartment. Hence as the differential pressure is increased to 0.005 bar, the oxygen cross-over reduces from 2.2 x 10$^{-4}$

mol/s to $2.0 \times 10^{-4}$ mols/s and thereby the OTH percentage reduces from 0.07% to 0.06%. As the differential pressure is further increased to 10 millibar, the oxygen crossover further decreases to below $1.8 \times 10^{-4}$ mol/s and the OTH reaches 0.055%.

However, to enhance the purity of hydrogen, a specific amount of hydrogen is inevitably lost as the hydrogen crosses over to the anode compartment under the influence of the differential pressure. This impact is illustrated in Figure 5b, indicating that as the differential pressure $\Delta p$ increases from 0 millibar to 10 millibar, the HTO percentage also increases from 0.65% to 0.68%. The increase in HTO percentage defines the permissible differential pressure. Consequently, the maximum achievable differential pressure $\Delta p$ is determined by the point where the HTO value remains just below the LEL-related safety value, typically fixed at 2%.

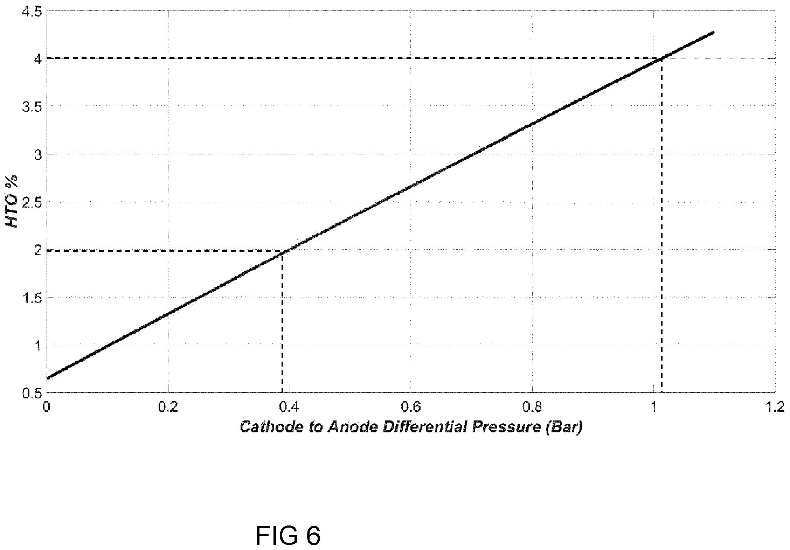

As shown in Fig 6, the HTO reaches 2% at a differential pressure of 400 millibar, for the system operating on the conditions mentioned for Fig. 5. Therefore, it is evident that the differential pressure $\Delta p$ can be increased to 400 millibar, to establish controlled pressure-driven convection. However, considering operational limitations of the stack, physical limitations of the diaphragm and gas impurities due to electrolyte mixing and other factors, the predetermined differential pressure $\Delta p$ between the cathode compartment and the anode compartment of the stack 101 can be lower in practice, for example up to 100 mbar. When all parameters of the simulation are kept constant, except that anolyte and catholyte streams are fully mixed, then 2% HTO is reached at a differential pressure of 200 millibar.

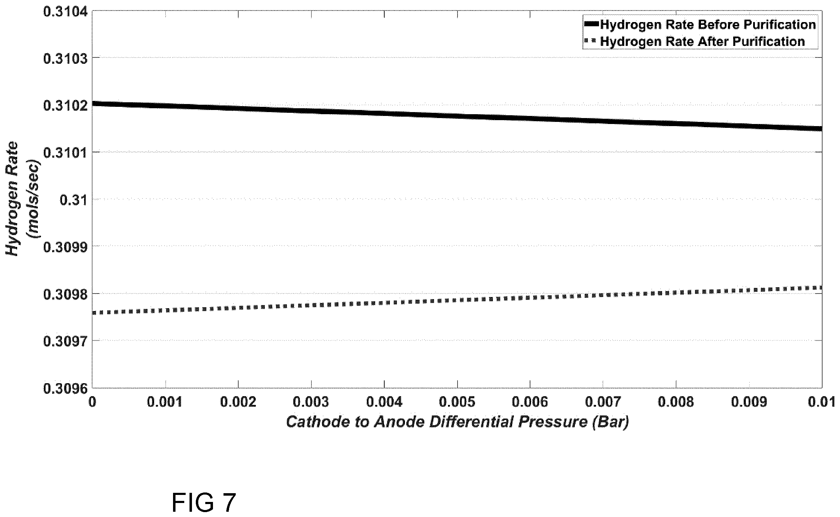

Fig. 7 depicts change of the hydrogen yield before and after purification as the function of differential pressure. The stack considered for the simulation contains 120 cells with a total active cell area of 46.18 $m^2$ and the current density of 1.2 kA/$m^2$. The hydrogen rate after purification stage here is the hydrogen flow rate after the gas passes through a de-oxo unit. From the figure it is evident that hydrogen rate decreases as the differential pressure $\Delta p$ increases because part of the produced hydrogen is lost due to cross-over to the anode compartment. However, the hydrogen produced according to the embodiment is purer compared to hydrogen produced in prior art, as a result of the lower rate of oxygen cross-over. Consequently, differential pressure is intentionally applied between the cathode and anode compartment to induce convection from the cathode compartment to the anode compartment, the hydrogen yield after the purification step increases. This effect is caused by the fact that the hydrogen product gas produced according to the present invention contains less oxygen impurity, which is typically removed in the deoxo unit by making the oxygen catalytically react with the produced hydrogen. For example, at zero differential pressure, the hydrogen rate before purification is 0.3102 mols/s and after purification, the hydrogen rate is less than 0.3098 mols/s. As the differential pressure $\Delta p$ is increased to 0.1 bar, the hydrogen rate before purification is around 0.3101 mols/s, however, the hydrogen has lower amount of oxygen impurity compared to hydrogen product gas produced at zero differential pressure. Therefore, less hydrogen is consumed at the de-oxo unit, and hence the hydrogen yield after the de-oxo unit is better than for equivalent product at zero differential pressure.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments.

It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the appended claims.

Although the embodiments herein are described with various specific embodiments, it will be obvious for a person skilled in the art to practice the invention with modifications. However, all such modifications are deemed to be within the scope of the claims.

It is also to be understood that the following claims are intended to cover all the generic and specific features of the embodiments described herein and all the statements of the scope of the embodiments which as a matter of language might be said to fall there between.

## Claims

1. An electrolyser system (100) comprising:

   at least one electrolyser stack (101) comprising a plurality of cells, each cell comprising a cathode compartment and an anode compartment separated by a diaphragm;
   a catholyte inlet (102) for supplying catholyte to the cathode compartment of the stack (101);
   an anolyte inlet (103) for supplying anolyte to the anode compartment of the stack (101);
   a catholyte outlet (104) for transporting a hydrogen-catholyte mixture from the cathode compartment to a hydrogen separator (106) and transporting a separated hydrogen out of the hydrogen separator (106);

an anolyte outlet (105) for transporting gas-electrolyte mixture from the anode compartment to an oxygen separator (107) and transporting a separated oxygen out of the oxygen separator (107); and

a pressure control unit (110) configured to establish a predefined differential pressure ($\Delta p$) between the cathode compartment and the anode compartment of the stack (101) by maintaining the pressure at the cathode compartment greater than the pressure at the anode compartment.

2. The electrolyser system according to claim 1, wherein a first inlet valve (111) and a second inlet valve (112) are located at the catholyte inlet (102) and the anolyte inlet (103) of the stack (101), respectively.

3. The electrolyser system according to claim 1, wherein a first outlet valve (113) and a second outlet valve (114) are located at the catholyte outlet (104) and the anolyte outlet (105) of the stack (101), respectively.

4. The electrolyser system according to claims 1 and 2, wherein the pressure control unit (110) comprises a first differential pressure sensor (116) located between the catholyte inlet (102) and the anolyte inlet (103).

5. The electrolyser system according to claims 1 and 3, wherein the pressure control unit (110) comprises a second differential pressure sensor (117) located between the catholyte outlet (104) and the anolyte outlet (105).

6. The electrolyser system according to any preceding claims, wherein the pressure control unit (110) comprises a differential pressure controller (115) configured to control the inlet valves (111, 112) and/or the outlet valves (113, 114), wherein the controller (115) is in digital communication with the first differential pressure sensor (116) and/or the second differential pressure sensor (117), and wherein the controller (115) is in digital communication with the inlet valves (111, 112) and/or the outlet valves (113, 114).

7. The electrolyser system according to claims 1, 2, 4 and 6, wherein the differential pressure controller (115) controls the first inlet valve (111) and/or the second inlet (112) valve based on the input from the first differential pressure sensor (116), to establish the predefined pressure difference ($\Delta p$).

8. The electrolyser system according to claims 1, 3, 5 and 6, wherein the differential pressure controller (115) controls the first outlet valve (113) and/or second outlet valve (114) based on the input from the second differential pressure sensor (117), to establish the predefined pressure difference ($\Delta p$).

9. The electrolyser system according to claims 1 to 6, wherein the differential pressure controller (115) controls one or both inlet valves (111, 112) and one or both outlet valves (113, 114) based on the input from the first differential pressure sensor (116) and the second differential pressure sensor (117), to establish the predefined pressure difference ($\Delta p$).

10. The electrolyser system according to any preceding claims, wherein the pressure control unit (110) further comprises an OTH sensor (118) in communication with the differential pressure controller (115) or a HTO sensor (119) in communication with the differential pressure controller (115), wherein the controller (115) further controls the predetermined differential pressure ($\Delta p$) based on an input from either the OTH sensor (118) or the HTO sensor (119).

11. The electrolyser system according to any preceding claims, wherein the predetermined pressure difference ($\Delta p$) is directly proportional to a direct current applied to the stack (101).

12. The electrolyser system according to claims 1, 3, 5 and 8, wherein the catholyte inlet (102) and the anolyte inlet (103) are at least partially combined for mixing the catholyte and the anolyte and the mixed electrolyte is supplied to the stack (101) through a common electrolyte inlet.

13. The electrolyser system according to any preceding claims, wherein the predetermined differential pressure ($\Delta p$) between the cathode compartment and the anode compartment of the stack (101) is less than 400 millibar, wherein the predetermined differential pressure ($\Delta p$) is preferably between 1 to 200 millibar.

14. A method to operate an electrolyser system (100), the method comprising:

supplying anolyte through an anolyte inlet into (103) an anode compartment of at least one electrolyser stack (101);
supplying catholyte through a catholyte inlet (102) to a cathode compartment of the stack (101);

transporting gas-electrolyte mixture by a catholyte outlet (104) from the cathode compartment;
transporting gas-electrolyte mixture by an anolyte outlet (105) from the anode compartment; and
establishing a predefined differential pressure ($\Delta p$) between the cathode compartment and the anode compartment of the stack (101) using a pressure control unit (110);
wherein the predefined differential pressure ($\Delta p$) is greater than zero and the pressure at the cathode compartment is greater than the pressure at the anode compartment.

15. The method according to claim 12, comprises step of controlling a first inlet valve (111) and/or a second inlet valve (112) by a differential pressure controller (115) and establishing the predefined pressure difference ($\Delta p$) based on an input from a first differential pressure sensor (116), wherein the first differential pressure sensor (116) is located between the catholyte inlet (102) and the anolyte inlet (103) of the stack (101).

16. The method according to claim 12, comprises step of controlling a first outlet valve (113) and/or a second outlet valve (114) by the differential pressure controller (115) and establishing the predefined pressure difference ($\Delta p$) based on an input from a second differential pressure sensor (117), wherein the second differential pressure sensor (117) is located between the catholyte outlet (104) and the anolyte outlet (105) of the stack (101).

17. The method according to any preceding claims, comprises step of controlling one or both inlet valves (111, 112) and one or both outlet valves (113, 114) by the differential pressure controller (115) and establishing the predefined pressure difference ($\Delta p$) based on the input from the first differential pressure sensor (116) and the second differential pressure sensor (117).

18. The method according to any preceding claims, comprises step of maintaining the predetermined differential pressure ($\Delta p$) between the cathode compartment and the anode compartment of the stack (101) to less than 400 millibar, wherein the predetermined differential pressure ($\Delta p$) is preferably between 1 to 200 millibar.

FIG. 1

FIG. 2

FIG. 3

FIG.4

FIG. 5a

FIG. 5b

FIG 5

FIG 6

FIG 7

Europäisches
Patentamt

European
Patent Office

Office européen
des brevets

## EUROPEAN SEARCH REPORT

**Application Number**

EP 24 15 3809

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 137 608 A1 (INDUSTRIE DE NORA SPA [IT]) 22 February 2023 (2023-02-22)<br>* abstract; claims 1-15; figures 1-2 *<br>* paragraph [0031] - paragraph [0037] *<br>----- | 1-3,11, 13,14,18 | INV.<br>C25B1/04<br>C25B9/05<br>C25B9/77<br>C25B15/02<br>C25B15/08 |
| X | US 2002/100681 A1 (KIRK DONALD W [CA] ET AL) 1 August 2002 (2002-08-01)<br>* abstract; figure 2 *<br>* paragraph [0111] - paragraph [0113] *<br>----- | 1-3,11, 12,14 | |
| X | US 2013/228456 A1 (RUSTA-SALLEHY ALI [CA] ET AL) 5 September 2013 (2013-09-05)<br>* abstract; figures 1-7C *<br>* paragraph [0046] - paragraph [0091] *<br>----- | 1-3, 10-12,14 | |
| X | US 2023/295821 A1 (GOGOANA RADU [US]) 21 September 2023 (2023-09-21)<br>* abstract; figures 5-7 *<br>* paragraph [0038] - paragraph [0049] *<br>----- | 1-9,11, 14-17 | |
| X | US 2020/332426 A1 (KURASHINA DAISUKE [JP] ET AL) 22 October 2020 (2020-10-22)<br>* abstract; figures 1-4 *<br>* paragraph [0023] - paragraph [0084] *<br>----- | 1-3,11, 14 | **TECHNICAL FIELDS SEARCHED (IPC)**<br><br>C25B |

The present search report has been drawn up for all claims

| Place of search | Date of completion of the search | Examiner |
|---|---|---|
| Munich | 1 August 2024 | Leu, Oana |

EPO FORM 1503 03.82 (P04C01)

## ANNEX TO THE EUROPEAN SEARCH REPORT
## ON EUROPEAN PATENT APPLICATION NO.

EP 24 15 3809

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2024

| Patent document cited in search report | | | Publication date | Patent family member(s) | | | Publication date |
|---|---|---|---|---|---|---|---|
| EP | 4137608 | A1 | 22-02-2023 | AU | 2022329382 | A1 | 29-02-2024 |
| | | | | CA | 3228725 | A1 | 23-02-2023 |
| | | | | CN | 117999377 | A | 07-05-2024 |
| | | | | EP | 4137608 | A1 | 22-02-2023 |
| | | | | EP | 4370730 | A1 | 22-05-2024 |
| | | | | IL | 310734 | A | 01-04-2024 |
| | | | | KR | 20240039225 | A | 26-03-2024 |
| | | | | TW | 202323592 | A | 16-06-2023 |
| | | | | WO | 2023021034 | A1 | 23-02-2023 |
| US | 2002100681 | A1 | 01-08-2002 | AT | E305528 | T1 | 15-10-2005 |
| | | | | CA | 2333859 | A1 | 01-08-2002 |
| | | | | DE | 60206358 | T2 | 22-06-2006 |
| | | | | EP | 1356134 | A1 | 29-10-2003 |
| | | | | US | 2002100681 | A1 | 01-08-2002 |
| | | | | US | 2004151953 | A1 | 05-08-2004 |
| | | | | WO | 02061180 | A1 | 08-08-2002 |
| US | 2013228456 | A1 | 05-09-2013 | US | 2005186458 | A1 | 25-08-2005 |
| | | | | US | 2009071819 | A1 | 19-03-2009 |
| | | | | US | 2013228456 | A1 | 05-09-2013 |
| | | | | WO | 2005028712 | A1 | 31-03-2005 |
| US | 2023295821 | A1 | 21-09-2023 | US | 2023295821 | A1 | 21-09-2023 |
| | | | | WO | 2023183037 | A2 | 28-09-2023 |
| US | 2020332426 | A1 | 22-10-2020 | CN | 111826681 | A | 27-10-2020 |
| | | | | JP | 7090050 | B2 | 23-06-2022 |
| | | | | JP | 2020176300 | A | 29-10-2020 |
| | | | | US | 2020332426 | A1 | 22-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. T. DE GROOT et al.** *International Journal of Hydrogen Energy*, 2023, vol. 47 (82), 34773-34783

- **SCHALENBACH et al.** *Journal of The Electrochemical Society*, 2016, vol. 163 (11), F3197-F3208